# EUROPÄISCHE PATENTANMELDUNG

(11) **EP 2 418 370 A2**
(43) Veröffentlichungstag der Anmeldung: **15.02.2012**
(21) Anmeldenummer: 11006157.9
(22) Anmeldetag: 27.07.2011
(51) Int. Cl.: F02D 41/00

(54) **Verfahren zur Regelung der Temperatur des Gassystems einer Brennkraftmaschine**

(30) Priorität: 12.08.2010 DE 102010034131
(71) Anmelder: Volkswagen, 38436 Wolfsburg (DE)
(72) Erfinder: Greiner, Michael, 39116 Magdeburg (DE)

(57) **Zusammenfassung**

Die Erfindung betrifft ein Verfahren zur Regelung der Temperatur des Gassystems einer Brennkraftmaschine (1) mit Niederdruck-Abgasrückführung. Das Abgas der Brennkraftmaschine (1) wird in einer Turbine (2) eines Turboladers (21) entspannt und mittels zumindest einer Einrichtung (15, 16) behandelt. Durch ein Rückführventil (7) wird das Abgas in eine Luftleitung (22) eingeleitet, wo es mit Frischluft aus der Umgebungsluft vermischt wird. Dieses Gemisch wird anschließend in einem Verdichter (3) des Turboladers (21) zur Ladeluft komprimiert und durch ein Saugrohr (20) zu einem Brennraum (11) der Brennkraftmaschine (1) geführt. In Abhängigkeit des Betriebszustands der Brennkraftmaschine (1) werden ein erstes Regelungsverfahren für die Temperatur der Ladeluft im Saugrohr (20), ein zweites Regelungsverfahren für die Abgasrückführ-Rate und/oder ein drittes Regelungsverfahren für die Temperatur des rückgeführten Abgases durchgeführt.

## Beschreibung

Die Erfindung betrifft ein Verfahren zur Regelung der Temperatur des Gassystems einer Brennkraftmaschine mit einer Einkreis-Niederdruck-Abgasrückführung, bei dem das Abgas in einer Turbine eines Turboladers entspannt, mittels zumindest einer Einrichtung behandelt und durch ein Rückführventil in eine Luftleitung eingeleitet wird, wo es mit Frischluft aus der Frischluftzufuhr zu einem Gemisch vermischt wird. Das Gemisch wird anschließend in einem Verdichter des Turboladers zur Ladeluft komprimiert und durch ein Saugrohr zu einem Brennraum der Brennkraftmaschine geführt.

Bei hohen Verbrennungstemperaturen entstehen im Motor umweltschädliche Stickoxide. Eine Reduzierung der Stickoxidemissionen wird erreicht, indem ein Teil des Abgases der angesaugten Frischluft zugemischt wird (Abgasrückführung - AGR). Durch die geringere Sauerstoffkonzentration im Gemisch läuft die Verbrennung langsamer ab und erreicht deshalb nicht so hohe Temperaturen. Es entstehen somit weniger Emissionen und der spezifische Kraftstoffverbrauch kann gesenkt werden.

Zur Erreichung geringster Stickoxidemissionen muss die Temperatur der Ladeluft im Saugrohr möglichst tief sein. Da das rückgeführte Abgas sehr warm ist, kann eine tiefe Temperatur im Saugrohr nur erreicht werden, wenn auf die Einleitung ungekühlten Abgases verzichtet wird.

Der Vorteil der Niederdruck-AGR gegenüber einer Hochdruck-AGR liegt darin begründet, dass das Abgas, zumal durch Einrichtungen wie Filter und Katalysator gereinigt, weitaus tiefer abgekühlt werden kann und so eine deutlich höhere Abgasrückführrate ermöglicht wird.

Mit einer Zweikreis-AGR können zwar die Vorteile beider Systeme genutzt werden, doch stehen der Zweikreis-AGR die höheren Kosten, Versottung durch Ruß im Gassystem und Leistungsabfall bei der Turbine des Turboladers als Nachteile entgegen.

Bei einer AGR im Niederdruckbereich ist das Rückführventil in Strömungsrichtung nach der Turbine des Turboladers angeordnet. Ist das Rückführventil vor der Turbine des Turboladers angeordnet, spricht man von einer AGR im Hochdruckbereich. Das Gassystem der Brennkraftmaschine umfasst alle Gasströme, die der Brennkammer der Brennkraftmaschine zugeordnet sind.

Eine Brennkraftmaschine mit einer Abgasrückführung im Niederdruckbereich ist allgemein bekannt. So zeigen die Druckschriften DE 10 2005 029 322 A1 und DE 600 24 020 T2 eine solche Brennkraftmaschine. Als Einrichtungen zur Behandlung des Abgases sind dabei Filter und/oder Katalysatoren bekannt.

Beim alleinigen Betrieb der AGR im Niederdruckbereich kommt es in Abhängigkeit von den Temperaturen der Umgebungsluft und der Brennkraftmaschine im Ladeluftkühler und/oder im Abgaskühler zu Kondensation und/oder Vereisung. Das Kondensat beziehungsweise die Eiskristalle können Beschädigungen oder Zerstörungen der Brennkraftmaschine und/oder des Turboladers verursachen. Daher sind Brennkraftmaschinen in der Regel sowohl mit einer Nieder- als auch einer Hochdruck-AGR ausgeführt. Durch ausschließliche Nutzung der hochdruckseitigen AGR in gewissen Betriebsgrenzen und mit der Konsequenz schlechterer Stickoxidemissionen können Kondensation und/oder Vereisung vermieden werden. Die AGR im Niederdruckbereich wird erst dann zugeschaltet, wenn wegen der Betriebstemperatur der Brennkraftmaschine eine Kondensation und/oder Vereisung ausgeschlossen werden kann.

Die für Kondensation und/oder Vereisung kritischen Temperaturen treten bei geringen Temperaturen der Umgebungsluft, aber vor allem bei Kaltstart der Brennkraftmaschine auf. Um Kondensation und/oder Vereisung bei einer Brennkraftmaschine zu vermeiden, welche ausschließlich eine Niederdruck-AGR aufweist, muss mit dem Einleiten des Abgases in die Luftleitung zumindest so lange gewartet werden, bis die Temperaturen im Ladeluftkühler und im Abgaskühler oberhalb des Gastaupunkts liegen. Bis zu diesem Moment findet aus Bauteilschutzgründen keine Abgasrückführung statt. Die Konsequenz ist eine extrem hohe Stickoxidemission.

Vor diesem Hintergrund liegt der Erfindung die Aufgabe zugrunde, ein Verfahren der eingangs genannten Art derart auszuführen, dass bei einer Brennkraftmaschine mit einer Einkreis-Niederdruck-Abgasrückführung eine optimale Emissionsqualität insbesondere bei geringen Temperaturen der Umgebungsluft und bei Kaltstart der Brennkraftmaschine möglich wird. Dabei soll möglichst schnell die Betriebstemperatur der Brennkraftmaschine erreicht und zugleich der Taupunktbereich verlassen werden, sodass ein Betrieb eines Ladeluftkühlers und eines Abgaskühlers der Brennkraftmaschine kurzfristig möglich sind.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren vorgesehen, bei dem ein erstes Regelungsverfahren für die Temperatur der Ladeluft im Saugrohr, ein zweites Regelungsverfahren für die Abgasrückführ-Rate (AGR-Rate) und/oder ein drittes Regelungsverfahren für die Temperatur des rückgeführten Abgases in Abhängigkeit des Betriebszustands der Brennkraftmaschine durchgeführt werden. Hierdurch ist es möglich, bei geringen Temperaturen der Umgebungsluft und/oder bei Kaltstart der Brennkraftmaschine die Niederdruck-AGR zu betreiben und so die Stickoxidemissionen zu minimieren. Vor allem ist es hierdurch möglich, eine Brennkraftmaschine, die ausschließlich mit einem Niederdruck-AGR ausgerüstet ist, bei derartigen Betriebsumgebungen und Betriebszuständen mit einer optimalen Emissionsqualität zu betreiben. Das erste, zweite und/oder dritte Regelungsverfahren werden nacheinander und/oder gleichzeitig durchgeführt.

Vorteilhaft ist es, dass bei dem ersten Regelungsverfahren für die Temperatur der Ladeluft im Saugrohr beim Start der Brennkraftmaschine oder während des Betriebs der Brennkraftmaschine bei einer geringen Temperatur der Umgebungsluft die Temperatur der Ladeluft in dem Saugrohr mittels eines Messinstruments gemessen wird und in Abhängigkeit der gemessenen Temperatur die Leistung eines Ladeluftkühlers eingestellt wird. So wird die Temperatur der Ladeluft im Saugrohr stets auf einem Sollwert über dem Taupunkt gehalten, wodurch der Eintrag von inkompressiblem Wasser in Form von Tropfen und/oder Eiskristallen in den Brennraum der Brennkraftmaschine unterdrückt wird. Dies wirkt einer Beschädigung der Brennkraftmaschine entgegen, erhöht deren Leistung und reduziert den Kraftstoffverbrauch sowie die Emissionen.

Die Temperatur im Ladeluftkühler wird von der Einstellung des Volumenstroms in der Kühlmittelleitung, dem Massenstrom des rückgeführten, warmen Abgases und der bei der Kompression des Luftgemischs im Verdichter entstehenden Verdichtungswärme beeinflusst. Ist die Temperatur der Ladeluft im Saugrohr so gering, dass der Taupunkt der Ladeluft unterschritten werden könnte, ist es eine Ausführungsform des Verfahrens, dass der Massenstrom an rückgeführtem Abgas eingestellt wird. Der Massenstrom des Abgases wird dabei so groß gewählt, dass die Wärmemenge des Gemisches zusammen mit der entstehenden Kompressionswärme aus dem Verdichter ausreichend ist, die Temperatur der Ladeluft oberhalb des Taupunkts einzustellen. Günstig ist es, dass die Leistung des Ladeluftkühlers mittels der Leistung einer regelbaren Pumpe für das Kühlmittel eingestellt wird.

Wasser kann in der Ladeluft in unterschiedlichen Aggregatzuständen vorkommen. Die Wassermasse ist die Summe der Wassermoleküle in der Ladeluft. Das Wasser in der Ladeluft tritt in den Erscheinungsformen Eiskristall, Kondensat, Tröpfchen oder Dampf auf.

Günstig ist es, dass bei dem zweiten Regelungsverfahren die AGR-Rate in Abhängigkeit der im Ladeluftkühler befindlichen Wassermasse eingestellt wird, wobei die Wassermasse unter Heranziehung eines Wasserbeladungsmodells aus der Differenz zwischen Eintrag und Austrag der Wassermasse ermittelt wird. Mittels des Wasserbeladungsmodells wird im Ladeluftkühler gezielt Kondensat und Eis bis zu einer für die Brennkraftmaschine unschädlichen Masse zugelassen. Hierdurch ist es möglich, eine Niederdruck-AGR zu betreiben, auch wenn im Ladeluftkühler Kondensationsbedingungen herrschen.

Vorteilhaft ist es, dass der Eintrag der Wassermasse in den Ladeluftkühler anhand des Zustands der Ladeluft nach dem Ladeluftkühler, insbesondere der Temperatur, anhand der Masse an rückgeführten Abgas und anhand des Massenstroms des Verdichters ermittelt wird und der Austrag der Wassermasse aus dem Ladeluftkühler anhand des Zustandes der Ladeluft nach dem Ladeluftkühler, insbesondere der Temperatur, und anhand des Massenstroms des Verdichters bestimmt wird. So ist zu jedem Zeitpunkt die im Ladeluftkühler befindliche Wassermasse bekannt. Steigt die Wassermasse unzulässig an, wird die rückgeführte Abgasmenge, die Verursacher des Kondensats und/oder Eises ist, so lange verringert, bis eine unzulässig hohe Wasser- und/oder Eismasse wieder abgebaut ist.

Vorteilhaft ist es, dass bei dem dritten Regelungsverfahren für die Temperatur des rückgeführten Abgases nach dem Start, insbesondere Kaltstart der Brennkraftmaschine, das Abgas solange über das Bypassventil an dem Abgaskühler vorbeigeführt wird, bis die Temperatur des Kühlmittels einen Schwellwert und/oder das Abgas am Messinstrument, insbesondere am Rückführventil, den Taupunkt überschritten hat. Hierdurch wird eine Kondensation in dem im Niederdruckbereich angeordneten Abgaskühler und somit Tropfenschlag auf den Verdichter verhindert. Dies ist besonders bei Kaltstart der Brennkraftmaschine von Bedeutung, da zu dem Zeitpunkt die Brennkraftmaschine noch nicht ihre Betriebstemperatur erreicht hat. Das Messinstrument ist am Rückführventil angeordnet, je nach Ausführungsvariante in Strömungsrichtung vor oder nach dem Rückführventil. Ist das Messinstrument in Strömungsrichtung vor dem Rückführventil angeordnet, kann es zwischen dem Rückführventil und dem Abgaskühler oder dem Rückführventil und dem Bypassventil angeordnet sein. Hat die Temperatur des Kühlmittels einen Schwellwert und/oder das Abgas am Messinstrument den Taupunkt überschritten, wird das Abgas durch den Abgaskühler geführt.

Eine vorteilhafte Weiterbildung des dritten Regelungsverfahrens ist es, dass während des Betriebs der Brennkraftmaschine im Warmlauf bei einer Temperatur des Kühlmittels des Abgaskühlers niedriger als 90 °C, bei einer Temperatur des Abgases an dem Messinstrument, insbesondere am Rückführventil, niedriger als ein Schwellenwert und/oder wenn das Abgas den Taupunkt unterschreitet, der Kühlmittelstrom des Abgaskühlers gedrosselt wird. Hat das Kühlmittel der Brennkraftmaschine einen Sollwert, insbesondere von 90 °C, erreicht und wird der Abgaskühler damit gespeist, entsteht üblicherweise kein Kondensat im Abgaskühler.

Günstig ist es, dass der Strom der mit dem Gemisch transportierten, insbesondere in flüssigem Aggregatzustand vorliegenden, Wassermasse mittels der Einstellung des Abgaskühlers so lange gedrosselt wird, bis die Temperatur am Messgerät, insbesondere am Rückführventil, einen bestimmten Schwellenwert und/oder den Taupunkt überschritten hat.

Der Taupunkt wird aus einem modellierten oder gemessenen Gaszustand und/oder den Stoffgrößen des Abgases bestimmt.

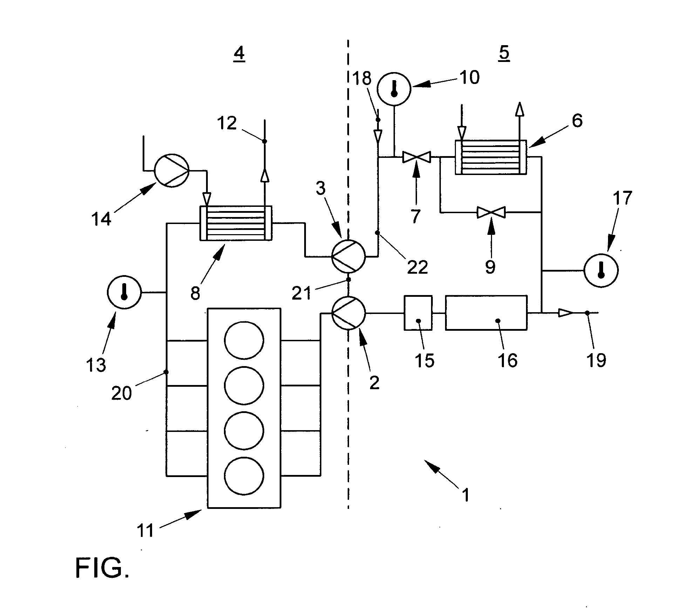

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt eine Brennkraftmaschine 1 mit einem aus einer Turbine 2 und einem Verdichter 3 bestehenden Turbolader 21. Systematisch teilt der Turbolader 21 das Gassystem der Brennkraftmaschine in einen Hochdruckbereich 4 und einen Niederdruckbereich 5 auf. Die Brennkraftmaschine 1 hat eine Einkreis-Niederdruck-Abgasrückführung, bei der das Abgas nach dem Durchströmen zumindest einer Einrichtung 15, 16 zur Behandlung des Abgases entweder über einen Ablass 19 in die Umgebung gelangt oder über ein Rückführventil 7 in die Luftleitung 22 geleitet, also rückgeführt wird. In der Luftleitung 22 vermischt sich das Abgas mit der über einen Einlass 18 zugeführten Frischluft aus der Umgebung zu einem Gemisch. Das Gemisch wird von dem Verdichter 3 komprimiert. Das komprimierte Gemisch durchströmt als Ladeluft einen Ladeluftkühler 8 und wird über ein Saugrohr 20 dem Brennraum 11 der Brennkraftmaschine 1 zugeführt. Im Niederdruckbereich 5 ist weiterhin ein Abgaskühler 6 für das rückzuführende Abgas vorgesehen. Parallel zu dem Abgaskühler 6 ist ein Bypassventil 9 angeordnet. Zur Bestimmung verfahrensrelevanter Stoffgrößen ist in Strömungsrichtung nach einer der Einrichtungen 15, 16 zur Behandlung des Abgases ein Messinstrument 17, nach dem Abgaskühler 6 ein Messinstrument 10 und am Saugrohr 20 ein Messinstrument 13 vorgesehen. Die Einrichtungen 15, 16 zur Behandlung des Abgases sind in dem gezeigten Ausführungsbeispiel ein Abgasfilter 15 und ein Katalysator 16. In dem Kühlmittelkreislauf 12 des Ladeluftkühlers 8 ist eine regelbare Pumpe 14 vorgesehen.

## Patentansprüche

1. Verfahren zur Regelung der Temperatur des Gassystems einer Brennkraftmaschine (1), bei dem das Abgas in einer Turbine (2) eines Turboladers (21) entspannt, mittels zumindest einer Einrichtung (15, 16) behandelt wird und durch ein Rückführventil (7) in eine Luftleitung (22) eingeleitet wird, wo es mit Frischluft aus der Umgebungsluft zu einem Gemisch vermischt wird, und bei dem anschließend das Gemisch in einem Verdichter (3) des Turboladers (21) zur Ladeluft komprimiert und durch ein Saugrohr (20) zu einem Brennraum (11) der Brennkraftmaschine (1) geführt wird, **dadurch gekennzeichnet, dass** ein erstes Regelungsverfahren für die Temperatur der Ladeluft im Saugrohr (20), ein zweites Regelungsverfahren für die Abgasrückführ-Rate und/oder ein drittes Regelungsverfahren für die Temperatur des rückgeführten Abgases in Abhängigkeit des Betriebszustands der Brennkraftmaschine (1) durchgeführt werden.

2. Verfahren nach Anspruch 1, **dadurch gekennzeichnet, dass** das erste, zweite und/oder dritte Regelungsverfahren nacheinander und/oder gleichzeitig durchgeführt werden.

3. Verfahren nach zumindest einem der vorangehenden Ansprüche, **dadurch gekennzeichnet, dass** bei dem ersten Regelungsverfahren für die Temperatur der Ladeluft im Saugrohr (20) beim Start der Brennkraftmaschine (1) bei einer Betriebstemperatur der Brennkraftmaschine (1) unterhalb eines Grenzwerts und/oder während des Betriebs der Brennkraftmaschine (1) bei einer Temperatur der Umgebungsluft unterhalb eines Sollwerts die Temperatur der Ladeluft in dem Saugrohr (20) mittels eines Messinstruments (13) gemessen wird und in Abhängigkeit der gemessenen Temperatur die Leistung eines Ladeluftkühlers (8) eingestellt wird.

4. Verfahren nach Anspruch 3, **dadurch gekennzeichnet, dass** die Leistung des Ladeluftkühlers (8) mittels der Leistung einer regelbaren Pumpe (14) für das Kühlmittel eingestellt wird und/oder der Massenstrom des rückgeführten Abgases eingestellt wird.

5. Verfahren nach zumindest einem der vorangehenden Ansprüche, **dadurch gekennzeichnet, dass** bei dem zweiten Regelungsverfahren für die Abgasrückführ-Rate die Abgasrückführ-Rate in Abhängigkeit der im Ladeluftkühler (8) befindlichen Wassermasse eingestellt wird, wobei die Wassermasse unter Heranziehung eines Wasserbeladungsmodells aus der Differenz zwischen Eintrag und Austrag der Wassermasse ermittelt wird.

6. Verfahren nach Anspruch 5, **dadurch gekennzeichnet, dass** der Eintrag der Wassermasse in den Ladeluftkühler (8) anhand des Zustands der Ladeluft nach dem Ladeluftkühler (8), insbesondere der Temperatur, anhand der Masse an rückgeführtem Abgas und anhand des Massenstroms des Verdichters (3) ermittelt wird.

7. Verfahren nach Anspruch 5, **dadurch gekennzeichnet, dass** der Austrag der Wassermasse aus dem Ladeluftkühler (8) anhand des Zustands der Ladeluft nach dem Ladeluftkühler (8), insbesondere der Temperatur, und anhand des Massenstroms des Verdichters (3) bestimmt wird.

8. Verfahren nach zumindest einem der vorangehenden Ansprüche, **dadurch gekennzeichnet, dass** bei dem dritten Regelungsverfahren für die Temperatur des rückgeführten Abgases nach dem Start der Brennkraftmaschine (1) das Abgas über das geöffnete Bypassventil (9) so lange an dem Abgaskühler (6) vorbeigeführt wird, bis die Temperatur des Kühlmittels einen Schwellwert und/oder das Abgas nach dem Abgaskühler (6) am Messinstrument (10) den Taupunkt überschritten hat.

9. Verfahren nach zumindest einem der vorangehenden Ansprüche, **dadurch gekennzeichnet, dass** bei dem dritten Regelungsverfahren für die Temperatur des rückgeführten Abgases während des Betriebs der Brennkraftmaschine (1) im Warmlauf bei einer Temperatur des Kühlmittels des Abgaskühlers (6) niedriger als 90 °C, bei einer Temperatur des Abgases an dem Messinstrument (10) niedriger als ein Schwellenwert und/oder wenn das Abgas den Taupunkt unterschreitet, der Kühlmittelstrom des Abgaskühlers (6) gedrosselt wird.

10. Verfahren nach zumindest einem der vorangehenden Ansprüche, **dadurch gekennzeichnet, dass** der Taupunkt aus einem modellierten oder gemessenen Gaszustand und/oder den Stoffgrößen des Abgases bestimmt wird.
